# NEUE EUROPÄISCHE PATENTSCHRIFT

(11) **EP 1 661 487 B2**
(45) Veröffentlichungstag und Bekanntmachung des Hinweises auf die Entscheidung über den Einspruch: **30.03.2022**
(45) Hinweis auf die Patenterteilung: 11.02.2009
(21) Anmeldenummer: 06002599.6
(22) Anmeldetag: 20.12.2002
(51) Int. Cl.: A46B 9/06, A46B 15/00

(54) **Zahnbürste und Verfahren zur Herstellung einer solchen Zahnbürste**
Toothbrush and method for production of such a toothbrush
Brosse à dents et son procédé de fabrication

(30) Priorität: 28.12.2001 DE 10164336
(43) Veröffentlichungstag der Anmeldung: 31.05.2006
(62) Teilanmeldung aus: 02782626.2
(73) Patentinhaber: Trisa Holding AG, 6234 Triengen (CH)
(72) Erfinder: Fischer, Franz, 6234 Triegen (CH); Strähler, Reto, 6034 Adligenswil (CH)
(74) Vertreter: Schaad, Balass, Menzl & Partner AG

(56) Entgegenhaltungen:
- EP-A1- 0 972 464
- EP-A2- 0 783 850
- EP-B1- 0 405 204
- WO-A-00/53054
- WO-A-00/74522
- WO-A1-01/21036
- WO-A1-96/15696
- WO-A1-96/20654
- WO-A1-98/18364
- WO-A2-00/76369
- DE-A1- 10 047 699
- DE-U1- 20 006 311
- DE-U1- 20 006 311
- US-A- 2 042 239
- US-A- 5 802 656
- US-A1- 2001 029 639
- mündliche Offenbarung während der Brush Expo Messe vom 9-11 April 2000

## Beschreibung

Die Erfindung betrifft eine Zahnbürste gemäss dem Oberbegriff von Anspruch 1 und ein Verfahren zu deren Herstellung mit den Merkmalen von Anspruch 20.

Zahnbürsten mit einem konventionellen Borstenfeld bestehend aus Bündeln von Borstenfilamenten, z.B. aus Polyamid (PA) oder Polyester (PBT), und einer zusätzlichen weichelastischen Struktur sind zum Beispiel aus der WO 00/64307 und der WO 01/21036 bekannt. Die konventionellen Borsten dienen dabei zur gewöhnlichen Reinigung der Zähne, während die weichelastische Struktur unterschiedliche Funktionen erfüllen kann, z.B. Massage des Gaumens, Dämpfung der Putzbewegung, Entfernung von Zahnbelägen, Polieren der Zahnoberfläche, elastische Aufhängung der Borsten und/oder Abdichten ungeschweisster Stellen. Die WO 00/64307 offenbart eine Zahnbürste mit stabförmigen weichelastischen Reinigungselementen, die etwa dieselbe Länge wie die konventionellen Borstenbündel haben und peripher am Kopfteil der Zahnbürste angeordnet sind. Bei der WO 01/21036 sind elastische Reinigungselemente flächig, z.B. wellenförmig gestaltet, und innerhalb des konventionellen Borstenfelds angeordnet. Bei der WO 00/64307 sind mehrere der weichelastischen Reinigungselemente über eine Materialbrücke aus demselben Material miteinander verbunden. Die Reinigungselemente werden nach dem Beborsten des Kopfteils der Zahnbürste mit konventionellen Borsten durch Umspritzen des Kopfteils hergestellt. Nachteilig hieran ist, dass die Borstenfilamente vor der Herstellung der weichelastischen Struktur gebrauchsfertig gemacht werden müssen, z.B. durch Abrunden der Borstenbündel oder Herstellen einer vorbestimmten Profilierung. Anschliessend ist ein erneutes Einsetzen in das Spritzgiesswerkzeug zur Herstellung der weichelastischen Struktur notwendig. Dabei können die Borstenbündel beschädigt oder verschmutzt werden. Die herstellbaren Formen der weichelastischen Struktur sind unter anderem aus entformungstechnischen Gründen beschränkt.

Der Erfindung liegt die Aufgabe zugrunde, eine Zahnbürste mit konventionellen Borsten und einer weichelastischen Struktur zur Verfügung zu stellen, die auf einfache Weise herstellbar ist. Des weiteren soll ein entsprechendes Herstellungsverfahren angegeben werden.

Die Aufgabe wird gelöst durch eine Zahnbürste mit den Merkmalen von Anspruch 1 sowie durch ein Verfahren zur Herstellung einer solchen Zahnbürste mit den Merkmalen von Anspruch 20. Vorteilhafte Weiterbildungen ergeben sich aus den abhängigen Ansprüchen, der Beschreibung und den Zeichnungen.

Erfindungsgemäss ist bei einer Zahnbürste der eingangs genannten Art wenigstens eine weichelastische Struktur, z.B ein Reinigungselement, an einem Trägerelement angeordnet, das aus einem Hartmaterial besteht. Dieses Trägerelement ist mit dem Kopfteil durch Ultraschallschweissen verbunden. Das Trägerelement und/oder die weichelastische Struktur weist Aussparungen auf, durch die die Borstenfilamente hindurchgeführt und zur Befestigung am Trägerelement mit ihren im Anwendungsfall dem Kopfteil zugewandten rückwärtigen Enden angeschmolzen sind. Diese AFT (Anchor Free Tufting) Technologie hat den Vorteil, dass sich weitgehend beliebige Borstenanordnungen, insbesondere auch flächige Borstengebilde, realisieren lassen. Das Trägerelement wird insbesondere mittels Ultraschallschweissen mit dem Kopfteil verbunden, z.B. wie in der DE 200 06 311 U beschrieben.

Eine solche Zahnbürste hat Vorteile bei der Herstellung, da das Zusatzteil, d.h. das mit der weichelastischen Struktur versehene Trägerelement, separat hergestellt und auf einfache Weise mit dem Kopfteil verbunden werden kann.

Die Verbindung des Trägerelements mit dem Kopfteil wird durch Ultraschallschweissen hergestellt. Herstellungstechnisch bevorzugt ist, dass das Trägerelement aus demselben Material wie das Kopfteil besteht, da in diesem Fall nur eine Hartkomponente zur Herstellung der Bürste bereitgehalten und nicht auf gegenseitige Materialverträglichkeit geachtet werden muss. Dies hat insbesondere beim Ultraschallschweissen Vorteile.

Die Anordnung der weichelastischen Struktur an einem aus einem Hartmaterial bestehenden Trägerelement hat folgende Vorteile: Das Zusatzteil kann separat vom übrigen Zahnbürstenkörper, bestehend aus Handgriff und Kopfteil, gefertigt und für den Endgebrauch vorbereitet werden. In einem einfachen weiteren Schritt erfolgt die Verbindung des Trägerelements mit dem Kopfteil, wobei das harte Trägerelement vorzugsweise daran angepasst geformt ist. Das Zusatzteil ist aufgrund des harten Trägerelements auf einfache Weise zu handhaben und kann deutlich leichter gegriffen werden als ein vollständig aus einem weichelastischen Material hergestelltes Zusatzteil.

Das Zusatzteil ist im Verhältnis zur übrigen Zahnbürste klein. Daher sind auch die benötigten Werkzeuge klein und kostengünstig. Der Zahnbürstengrundkörper und die Beborstung kann auch bei späterer Ausstattung mit unterschiedlichen Zusatzteilen mit einem Standardwerkzeug hergestellt werden. Um Zahnbürsten mit unterschiedlichen Zusatzteilen herzustellen, muss lediglich das Zusatzteil bzw. das entsprechende Werkzeug dafür ausgetauscht werden, was auf einfache und kostengünstige Weise geschehen kann.

Ein weiterer Vorteil der separaten Herstellung von Zusatzteil und Grundkörper ist, dass beliebige Formen von weichelastischen Reinigungselementen realisiert werden können, z.B. auch solche, die die konventionellen Borsten kreuzen, berühren oder beim Einsetzen des Zusatzteils verdrängen. Durch die separate Herstellung ist die Entformung der weichelastischen Struktur unproblematisch. Es sind Geometrien im Spritzgiessverfahren herstellbar, die nur unter grossem Aufwand entformbar wären, wenn das Reinigungslement direkt auf dem beborsteten Kopfteil angebracht würde.

Bisher wurde die weichelastische Struktur aus herstellungstechnischen Gründen aus demselben Material wie etwaige weichelastische Komponenten am Griffteil hergestellt. Durch die Erfindung ergibt sich für das Material der Struktur eine grössere Freiheit, so dass beispielsweise ein anderer Härtegrad verwendet werden kann.

Durch eine unlösbare Verbindung des Zusatzteils mit dem Kopfteil wird verhindert, dass sich das Zusatzteil während des Gebrauchs ablöst, und die Verschluckungsgefahr ausgeschlossen.

Die konventionellen Borsten sind beispielsweise direkt am Kopfteil, an einer als weiteres Trägerelement wirkenden Borstenplatte oder auch am Trägerelement für die weichelastischen Reinigungselemente befestigt, wobei alle Varianten Vorteile aufweisen. Bei der Befestigung der Borsten am Kopfteil bzw. an der Borstenplatte können die weichelastische Struktur und die konventionellen Borsten vor dem Zusammensetzen von Kopfteil und Zusatzteil unabhängig voneinander für den späteren Gebrauch vorbereitet werden, so dass ein gegenseitiges Beschädigen oder Verschmutzen verhindert wird.

Das Anbringen von sowohl konventionellen Borsten als auch der weichelastischen Struktur am Trägerelement hat den Vorteil, dass eine beliebige räumliche Anordnung der beiden Komponenten möglich ist. Ein solches vorbereitetes Trägerelement kann zur Endfertigung mit verschiedenen Zahnbürstengrundkörpern verbunden werden, so dass mit wenigen Grundkörpern eine grosse Anzahl verschiedener Zahnbürsten realisierbar ist.

Die konventionellen Borsten können in beiden Fällen vor oder nach dem Anbringen der weichelastischen Struktur für den Gebrauch vorbereitet werden. Sind beide Komponenten am Trägerelement vorgesehen, wird bevorzugt zuerst die weichelastische Struktur, einschliesslich etwaiger Reinigungselemente, angeformt und das Trägerelement anschliessend mit Borsten besetzt, welche beispielsweise durch Aussparungen in der weichen oder harten Komponente hindurchgeführt sein können.

Die Herstellung des Zusatzteils, d.h. des Trägerelements mit einem oder mehreren weichelastischen Reinigungselementen, erfolgt bevorzugt im Zwei- oder Mehrkomponentenspritzgiessverfahren. Dabei wird vorzugsweise eine unlösbare Verbindung zwischen den Komponenten hergestellt.

Die weichelastische Struktur ist bevorzugt auch seitlich am Trägerelement angeordnet, z.B. angespritzt, wobei sie im montierten Zustand seitlich mit der Aussenkontur des Kopfteils abschliesst oder über diese hinausgeht. Sie dient z.B. zum Abdichten ungeschweisster Stellen, zum Massieren des Gaumens, z.B. durch angespitzte leicht abstehende elastische Elemente, oder als Aufprallschutz beim Putzen.

Vorzugsweise besteht das weichelastische Reinigungselement aus einem insbesondere thermoplastischen Elastomer, z.B. aus natürlichem oder synthetischem Gummi. Für das Trägerelement wird bevorzugt das für den Zahnbürstengrundkörper eingesetzte Material verwendet, insbesondere Polypropylen, Styrol-Acryl-Nitril, Polyester, Acryl-Nitril-Butadienstyrol (ABS) oder Isoplast^{®}. Die Shore A Härte der weichen Komponente ist vorzugsweise geringer als 90 und liegt besonders bevorzugt unter 50.

Da sich gummielastisches Material, insbesondere ein thermoplastisches Elastomer, aufgrund der starken Dämpfung der Ultraschallschwingungen nur bedingt Ultraschall verschweissen lässt, wird die Schweissfläche zwischen Trägerelement und Kopfteil bevorzugt zumindest teilweise von der weichelastischen Komponente freigehalten. Vorzugsweise wird dazu der Anspritzpunkt der Weichkomponente an der borstentragenden Seite des Trägerelements gewählt, damit keine Materialbrücken aus der Weichkomponente die Schweissfläche verkleinern. Für den Fall, dass dennoch im Bereich der Schweissfläche weichelastische Elemente angeordnet werden sollen, wird deren Lage vorzugsweise seitlich von der Längsachse der Zahnbürste gewählt. Damit entstehen unverschweisste Stellen ebenfalls seitlich am Trägerelement, während der in Längsrichtung vordere und hintere Bereich zwischen Trägerelement und Kopfteil verschweisst werden kann. Somit ist ein guter Halt des Trägerelements gewährleistet, da durch die Putzbewegung und die entsprechenden Hebelkräfte vor allem der vordere bzw. hintere Bereich und weniger die Seitenbereiche belastet werden. Eine nur punktuelle Verschweissung mit ungeschweissten Stellen kann auch gezielt eingesetzt werden, damit Bürstenkopf und Trägerelement gegeneinander beweglich sind und so eine gewisse Flexibilität des gesamten Bürstenkopfes erreicht wird.

Die weichelastische Struktur kann nach Art einer Dichtlippe auch zum zusätzlichen Abdichten ungeschweisster Stellen dienen. Dadurch wird vorteilhaft der Raum zwischen dem Trägerelement und dem Kopfteil gegen das Eindringen von Wasser abgedichtet. Somit können sich in diesem Bereich keine Keime ansammeln, und die Bürste ist hygienischer. Um eine angemessene Dichtfunktion zu erreichen, ist die Shore A Härte der Weichkomponente vorzugsweise geringer als 50.

Beispiele für Zahnbürsten sind in den Zeichnungen dargestellt und nachfolgend beschrieben. Es zeigen rein schematisch:
- Fig. 1a-d: Ansichten einer Zahnbürste in verschiedenen Montagestadien, wobei das Zusatzteil durch Nieten am Kopfteil befestigt wird;
- Fig. 2a-e: Ansichten einer weiteren Zahnbürste, deren Zusatzteil durch Nieten befestigt wird;
- Fig. 3a-e: Ansichten einer Ausführungsform einer erfindungsgemässen Zahnbürste, deren Zusatzteil durch Schweissen befestigt wird;
- Fig. 4a-e: Ansichten einer Zahnbürste, deren Zusatzteil mittels einer Schnappverbindung befestigt wird;
- Fig. 5a-e: Ansichten einer weiteren Zahnbürste, deren Zusatzteil durch eine Schnappverbindung befestigt wird;
- Fig. 6a-f: Ansichten einer Zahnbürste, bei der das Zusatzteil in klemmender Weise befestigt wird;
- Fig. 7a-e: die Herstellung einer Ausführungsform einer erfindungsgemässen Zahnbürste im AFT Verfahren;
- Fig. 8a-e: Ansichten einer weiteren Zahnbürste, deren Zusatzteil durch eine Schnappverbindung befestigt wird;
- Fig. 9a-f: Ansichten einer weiteren Ausführungsform einer erfindungsgemässen Zahnbürste, deren Zusatzteil mit Spiel am Kopfteil befestigt ist;
- Fig. 10a-j: die Herstellung einer weiteren Ausführungsform einer erfindungsgemässen Zahnbürste im AFT Verfahren;
- Fig. 11a-c: Ansichten einer Ausführungsform einer erfindungsgemässen Zahnbürste mit einer seitlichen Umrandung aus weichelastischem Material.

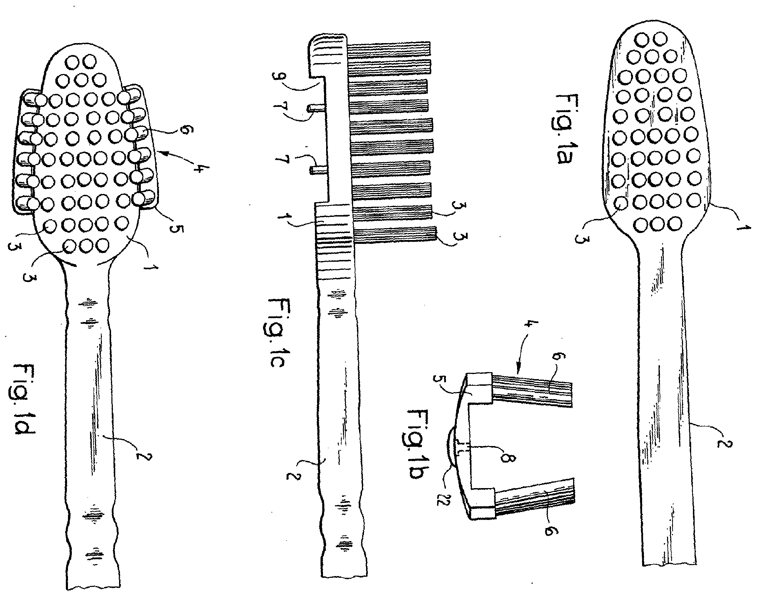

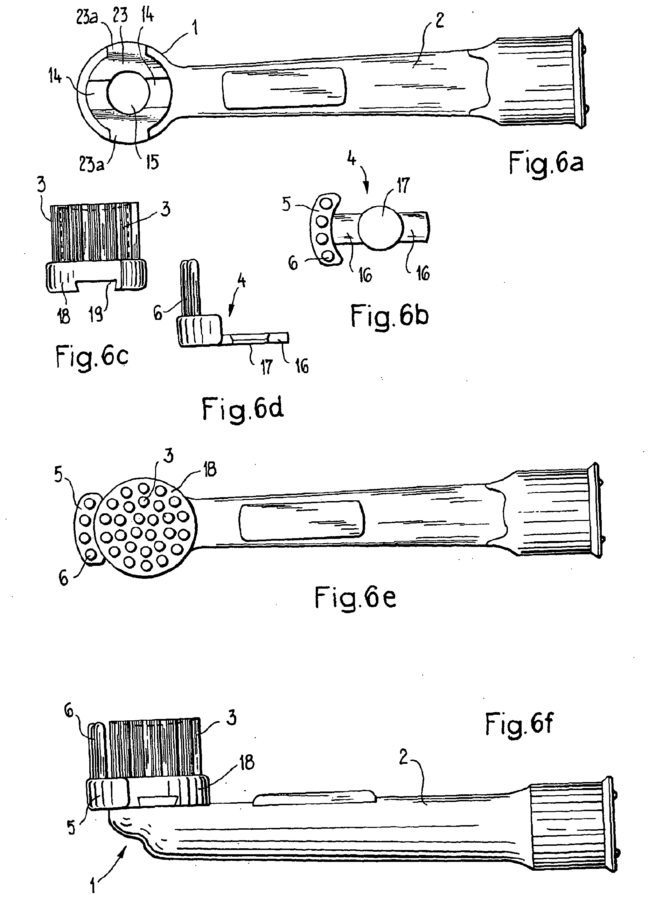

Alle dargestellten Zahnbürsten haben einen Grundkörper mit einem Kopfteil 1 und einem Griffteil 2, der nur teilweise dargestellt ist. Ein Zusatzteil 4 mit mehreren weichelastischen Reinigungselementen 6 unterschiedlicher Form, die mit einem Trägerelement ebenfalls unterschiedlicher Form verbunden sind, ist bei der fertigen Zahnbürste mit dem Kopfteil 1 verbunden. Das Kopfteil 1 ist des weiteren direkt (Fig. 1 - 5) bzw. indirekt (Fig. 6) mit Bündeln 3 aus konventionellen Borstenfilamenten versehen. Material und Anordnung der Borstenbündel 3 kann unterschiedlich sein. Im Folgenden wird nur auf die Besonderheiten der einzelnen Beispiele eingegangen. Dabei sind einander entsprechende Elemente mit gleichen Bezugszeichen bezeichnet.

Fig. 1a,c zeigt eine Zahnbürste, deren Kopfteil 1 bereits mit Borstenbündeln 3 versehen wurde. Das in Fig. 1b dargestellte Zusatzteil 4 hat ein im Schnitt U-förmiges Trägerelement 5 aus einem Hartmaterial, insbesondere demselben Kunststoff, der zur Herstellung des Kopfteils 1 bzw. des gesamten Grundkörpers verwendet wurde. Mit dem Trägerelement 5 sind weichelastische Reinigungselemente 6, hier in Form von geraden Stäben, fest verbunden. Die Reinigungselemente 6 sind leicht aus der Vertikalen aufeinander zu geneigt und schliessen mit der Vertikalen einen Winkel von 5 bis 30° ein. Auf diese Weise berühren die elastischen Reinigungselemente 6 die konventionellen Borstenbündel 3 (Fig. 1d) und können diese sogar kreuzen (nicht dargestellt). Eine derartige Stellung ist mit konventionellen Herstellungsverfahren nur mit aufwendigen Verdrängungstechniken realisierbar.

Das Trägerelement 5 ist in seiner Form an eine in Fig. 1c sichtbare Aussparung 9 im den Borstenbündeln 3 abgewandten Bereich des Kopfteils 1 angepasst. In diesem Bereich befinden sich des weiteren Stifte 7, die durch ein Loch 8 im Trägerelement 5 hindurchgesteckt werden können. Die Stifte 7 werden kalt oder warm verformt und so im Loch 8 dauerhaft fixiert. Eine Aufsicht auf die fertiggestellte Zahnbürste zeigt Fig. 1d.

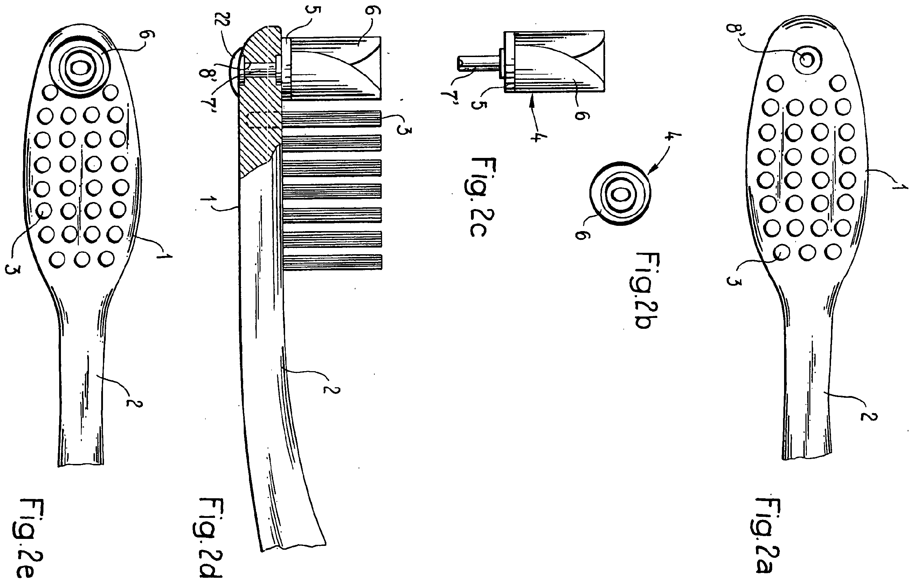

Der untere Bereich des Lochs 8 oder des gesamten Kopfteils 1 kann aus ästhetischen oder hygienischen Gründen durch eine Schutzschicht 22 aus weichem Kunststoff abgedeckt werden (vgl. Fig. 2d). Ebenso werden die Grenzbereiche zwischen dem Trägerelement 5 und dem Kopfteil 1 vorzugsweise durch weichen Kunststoff abgedeckt. Als Material hierfür wird beispielsweise das Weichmaterial verwendet, das auch für den Griffbereich der Zahnbürste verwendet wird. Vorzugsweise wird die Schutzschicht bereits während der Herstellung des Griffteils im Mehrkomponentenspritzgiessverfahren angespritzt. Die Kunststoffschicht kann jedoch auch direkt an das Trägerelement angeformt sein.

Ein weiteres Beispiel für eine Zahnbürste, deren Zusatzteil 4 durch eine Nietverbindung mit dem Kopfteil 1 verbunden wird, ist in Fig. 2a-e dargestellt. Das Zusatzteil besteht hier aus einem tellerförmigen Trägerelement 5, mit dem flächige weichelastische Reinigungselemente 6 rosettenförmig verbunden sind. Das Trägerelement 5 weist einen Stift 7' auf, mit dem das Zusatzteil 4 durch ein entsprechend vorbereitetes Loch 8' im vorderen Ende des Kopfteils durchgesteckt und durch Verformen des Stiftes 7' fixiert werden kann. Die weichelastischen Reinigungselemente 6 befinden sich im Bereich der Spitze des Kopfteils 1. In Richtung des Griffteils 2 schliesst sich das Borstenfeld mit einzelnen Borstenbündeln 3 an. Eine Schutzschicht 22 deckt den Bereich des Lochs 8' ab.

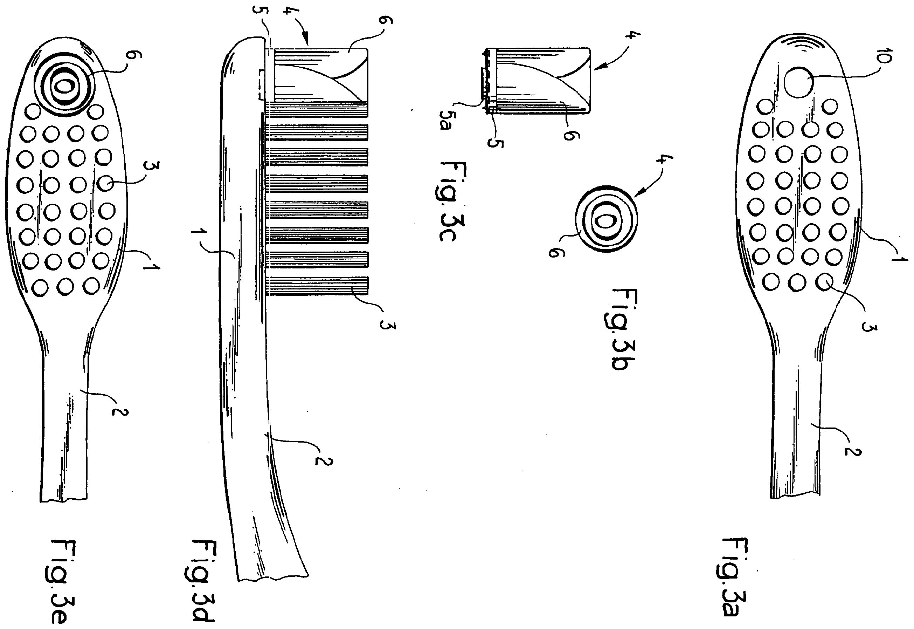

Fig. 3a-e zeigt ein Beispiel für eine Ausführungsform einer erfindungsgemässen Zahnbürste, die im Ergebnis einer Zahnbürste gemäss Fig. 2 ähnelt. Das Zusatzteil 4 mit einem tellerförmigen Trägerelement 5 und rosettenartigen weichelastischen Reinigungselementen 6 wird vorliegend mittels einer Schweissverbindung mit dem Kopfteil 1 verbunden. Dazu weist der vordere Bereich des Kopfteils eine tellerartige Aussparung auf, in die das Trägerelement 5 dank einer entsprechend strukturierten Unterseite 5a mittels Ultraschallschweissen dauerhaft eingefügt wird. Eine Seitenansicht der fertigen Zahnbürste zeigt Fig. 3d, die Aufsicht auf das kombinierte Borstenfeld aus konventionellen Borstenbündeln 3 und weichelastischen Reinigungselementen 6 zeigt Fig. 3e.

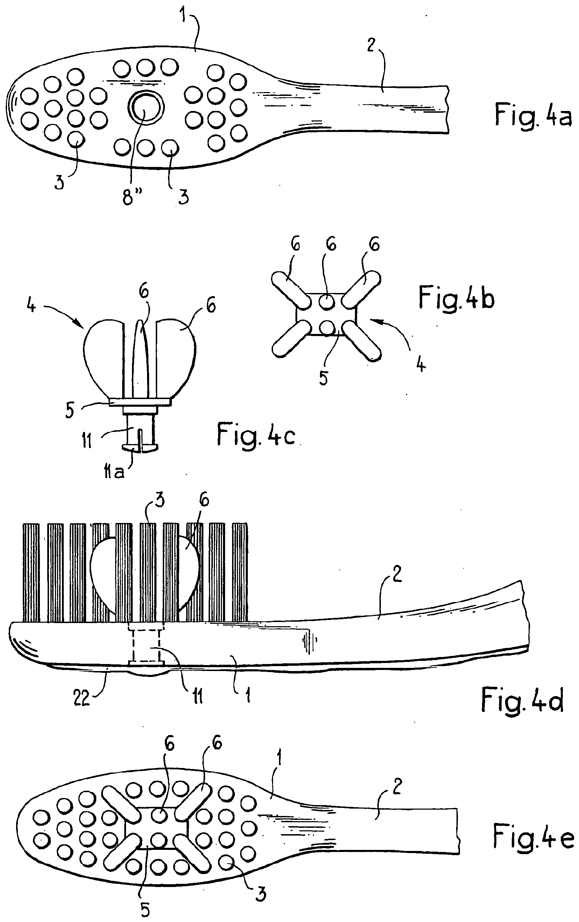

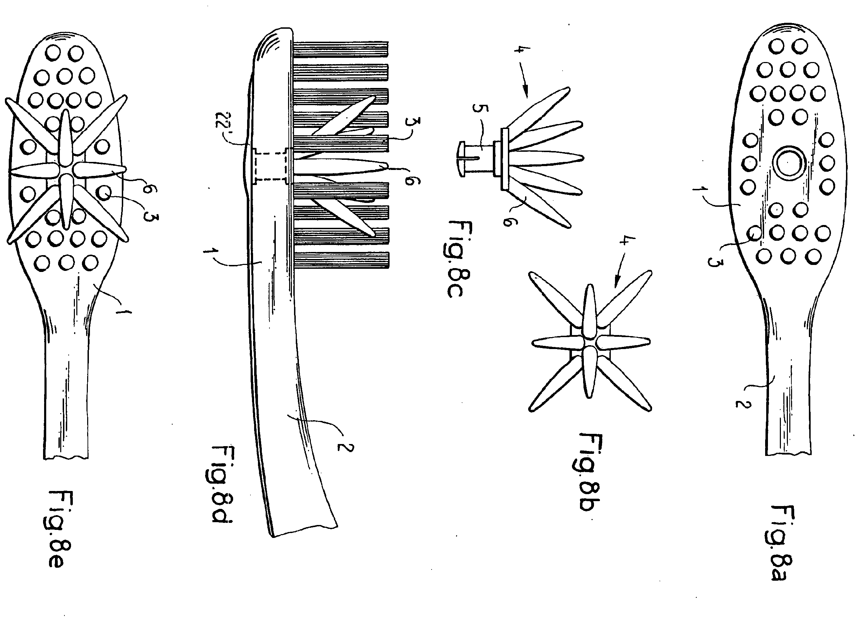

Das Zusatzteil 4 der in Fig. 4a-e dargestellten Zahnbürste ist mittels einer Schnappverbindung in der Mitte des Kopfteils 1 befestigt. Das Zusatzteil 4 umfasst ein rechteckiges Trägerelement 5, an dessen Ecken flügelartige weichelastische Reinigungselemente 6 angeordnet sind. Auf dem Trägerelement 5 befinden sich des weiteren zwei stabförmige Reinigungselemente 6 (Fig. 4b,c). Wie in Fig. 4a dargestellt, weist das Kopfteil 1 ein mittiges Loch 8" auf, das zum Durchstecken eines federnd gestalteten Fortsatzes 11 am Trägerelement 5 dient. Zusatzteil 4 und Kopfteil 1 werden durch eine Schnappverbindung miteinander verbunden, die aufgrund des am unteren Ende 11a des Fortsatzes 11 vergrösserten Querschnitts nicht ohne weiteres lösbar ist. Das Borstenfeld der konventionellen Borstenbündel 3 ist derart konfiguriert, dass die flügelartigen Reinigungselemente 6 zwischen den konventionellen Borstenbündeln 3 Platz finden, wie in Fig. 4a und 4e dargestellt. Das Zusatzteil 4 wird separat gefertigt und anschliessend in das Kopfteil 1 mit dem vorbereiteten Borstenfeld eingesetzt. Dadurch können auch durch das konventionelle Borstenfeld durchgreifende Strukturen der weichelastischen Reinigungselemente 6 realisiert werden, wie die über Eck angeordneten flügelartigen Elemente aus Fig. 4b-e oder die in verschiedene Raumrichtungen weisenden, aufgefächerten stiftförmigen Reinigungselemente aus Fig. 8. Die Unterseite des Kopfteils 1 ist aus hygienischen oder ästhetischen Gründen durch eine Schicht 22 aus weichelastischem Material abgedeckt.

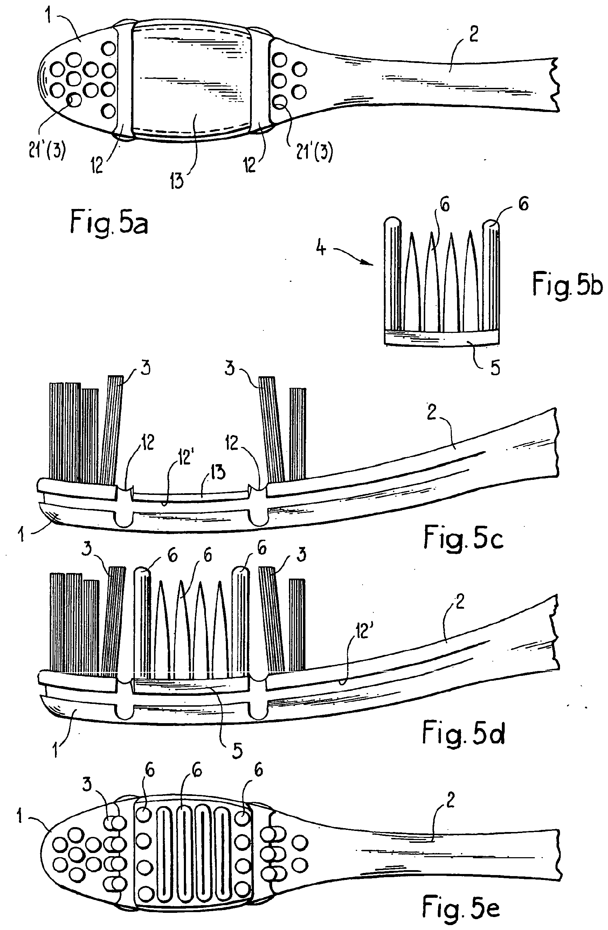

Fig. 5a-e zeigen ein weiteres Beispiel für eine Schnappverbindung zwischen dem Zusatzteil 4 und dem Kopfteil 1 einer Zahnbürste. Das Kopfteil 1 weist innerhalb des Borstenfelds aus konventionellen Borstenbündeln 3 einen vorbereiteten Bereich 13 für die Aufnahme des Zusatzteils 4. Dieser Bereich 13 besteht aus einer Vertiefung, an deren Rand senkrecht zur Ausrichtung des Handgriffs 2 jeweils eine Nut 12 verläuft, die dem Kopfteil 1 wie auch die an seinem seitlichen Rand verlaufenden Nuten 12' eine gewisse Elastizität bzw. federnde Wirkung gibt. Der vorbereitete Bereich 13 ist geringfügig kleiner als die Grundfläche des Trägerelements 5, so dass dieses passend und in klemmender Weise in den Bereich 13 eingesetzt werden kann. Wie aus der Aufsicht in Fig. 5e erkennbar, hat das Zusatzteil sowohl stabförmige als auch flächige, quer zur Ausrichtung des Handgriffs 2 angeordnete Reinigungselemente.

Fig. 6a-f zeigt ein weiteres Beispiel für eine Zahnbürste, hier eine Aufsteckzahnbürste für eine elektrisches Zahnreinigungsgerät. Die konventionellen Borstenbündel 3 sind an einer separaten Borstenplatte 18 befestigt, die im montierten Zustand mit dem daran angepassten Kopfteil 1 der Zahnbürste bzw. einer darauf dreh- oder schwenkbar befestigten Scheibe 23 verbunden ist. Die weichelastischen Reinigungselemente 6, hier stabförmig, sind an einem in der Aufsicht leicht gebogenen Trägerelement 5 befestigt, das einen flächigen Fortsatz 16 aufweist, der im wesentlichen senkrecht zur Ausrichtung der Reinigungselemente 6 orientiert ist. Mit diesem Fortsatz 16 lässt sich das Zusatzteil 4 in eine entsprechend geformte Nut 14 in der Scheibe 23 1 einführen. In der Mitte des Kopfteils 1 und der Nut 14 ist eine runde Aussparung 15 angeordnet, in die eine entsprechendes Gegenelement 17 am Fortsatz 16 des Zusatzteils 4 eingreift. Damit werden Zusatzteil 4 und Kopfteil 1 passend und in klemmender Weise miteinander verbunden. Die Borstenplatte 18 hat an ihrem unteren Ende eine Nut 19 mit der die Borstenplatte 18 an der Scheibe 23 bzw. deren seitlichen Fortsätzen 23 befestigt werden kann. Das Zusatzteil 4 wird im dargestellten Beispiel durch die Scheibe 23 mitbewegt. Als Alternative kann das Zusatzteil 4 direkt am Kopfteil 1 befestigt werden und rotiert nicht mit.

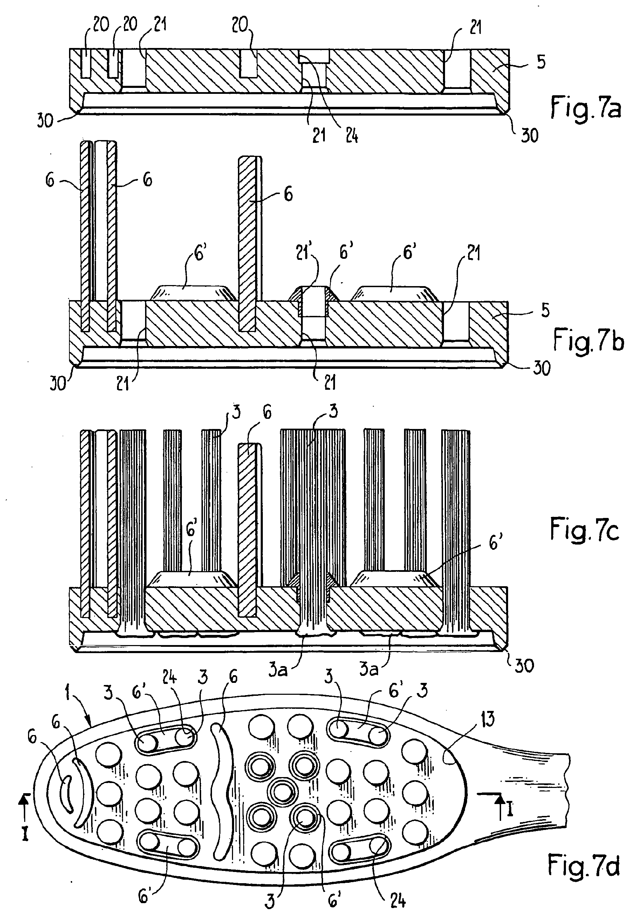

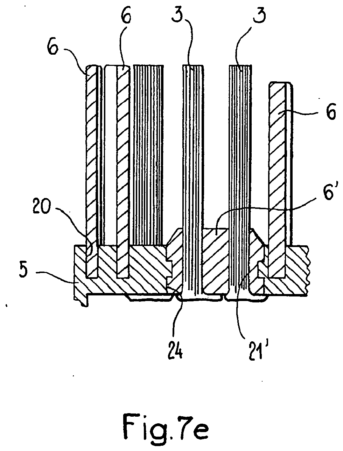

Figur 7a-e zeigen ein Beispiel für die Herstellung einer Ausführungsform einer erfindungsgemässen Zahnbürste mittels der AFT Technologie. Die Figuren 7a-c zeigen Schnittansichten des Trägerelements 5 in verschiedenen Verfahrensstadien, und zwar vor dem Bestücken mit weichelastischen Reinigungselementen 6 und konventionellen Borstenbündeln 3 (Fig. 7a), nach dem Aufbringen des weichelastischen Materials (Fig. 7b) und nach dem Aufbringen der Borsten (Fig. 7c). Das Trägerelement 5 ist in seiner äusseren Form an die Abmessungen eines vorbereiteten Bereichs 13 in Form einer flachen Aussparung im Kopfteil 1 der Zahnbürste angepasst. Das Trägerelement 5 weist vorbereitete Bereiche 20 auf, in die die weichelastischen Reinigungselemente 6 angebracht, insbesondere angespritzt, werden. Des weiteren hat das Trägerelement 5 Aussparungen 24, die ganz oder teilweise mit weichelastischem Material 6' gefüllt werden, vgl. auch die Detailzeichnung Fig. 7e. Des weiteren sind Löcher 21 im Trägerelement 5 vorhanden, durch die Borstenbündel 3 durchgesteckt und an der Rückseite durch Anschmelzen ihrer rückwärtigen Enden 3a befestigt werden. Die elastischen Materialbereiche 6' haben weitere Löcher 21', die ebenfalls zur Aufnahme von Borstenbündeln 3 dienen, welche auf die gleiche Art befestigt werden. Die Materialbereiche 6' können ein oder mehrere Borstenbündel 3 aufnehmen. Die im elastischen Material 6' verankerten Borstenbündel 3 sind daher besonders elastisch verankert bzw. aufgehängt. Weitere Borstenbündel 3 werden direkt auf dem Trägerelement 5 befestigt. Das mit Borstenbündeln und der weichelastischen Struktur 6, 6' bestückte Trägerelement 5 wird anschliessend in den vorbereiteten Bereich 13 eingesetzt.

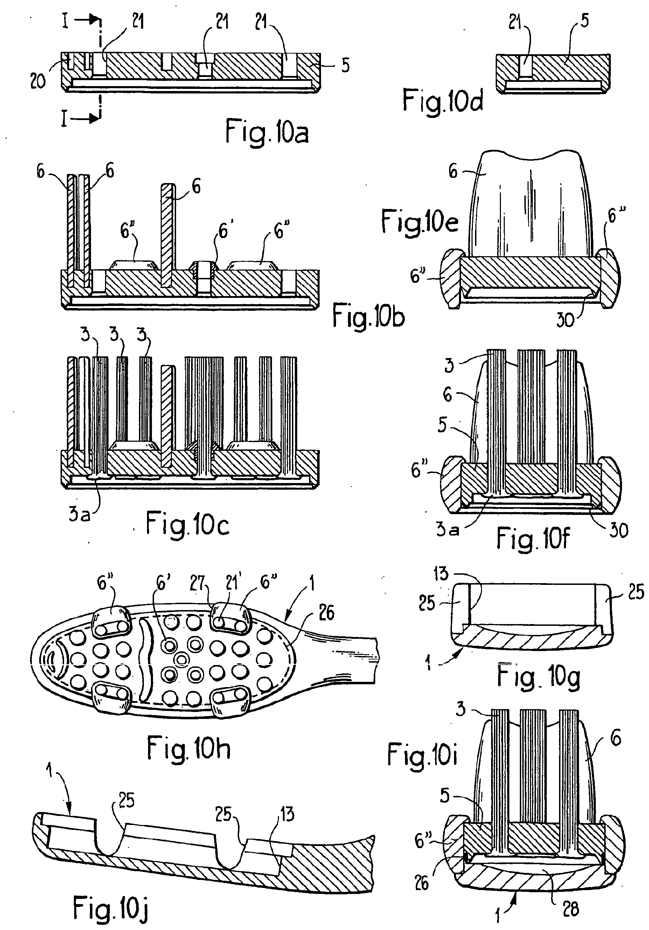

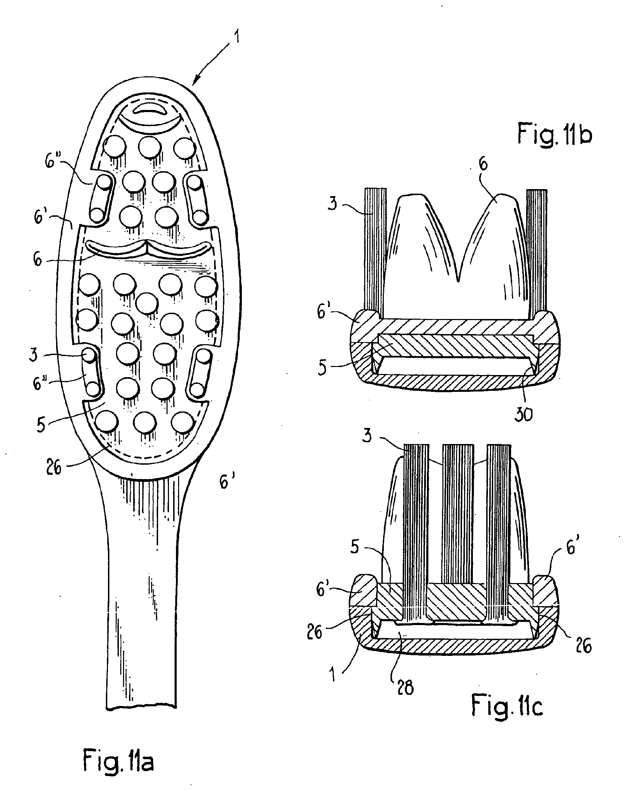

Die im Anwendungsfall dem Boden der Ausnehmung 13 zugewandte Kante 30 des Trägerelements 5 ist spitz gestaltet, ebenso im Beispiel aus Fig. 10 und 11. Diese spitz zulaufende Kante 30 dient beim Ultraschallschweissen zum Verbinden mit dem Kopfteil 1 als Energiekonzentrator sowie Materialreservoir für zu verflüssigendes Material.

Die AFT Technologie kommt ohne Anker oder Klammern zum Befestigen der Borstenfilamente aus, die stattdessen direkt an der Trägerplatte angeschweisst werden. Damit wird die Breite eines Borstenbündels nicht durch den Anker bestimmt, so dass sich auch feinere Strukturen, insbesondere auch flächige Borstenanordnungen, realisieren lassen.

Technisch ist es auch möglich, beim AFT-Verfahren die Borstenfilamente vor dem Anbringen an die Trägerplatte für den Gebrauch vorzubereiten. Realisiert wird derzeit jedoch die Variante, bei der die Borsten erst nach dem Anbringen an die Trägerplatte bearbeitet werden.

Fig. 8a-e zeigt eine Variante zur Zahnbürste aus Fig. 4. Das Borstenfeld aus konventionellen Borstenbündeln 3 entspricht Fig. 4. Das Zusatzteil 4 hat eine Mehrzahl von sternförmig auseinandergehenden stiftförmigen Reinigungselementen 6, die durch die konventionellen Borstenbündel 3 durchgreifen (Fig. 8d, e). Der Befestigungsmechanismus entspricht Figur 4. Eine Schicht 22 aus weichelastischem Material deckt die Unterseite des Kopf- und Griffteils 1,2 ab.

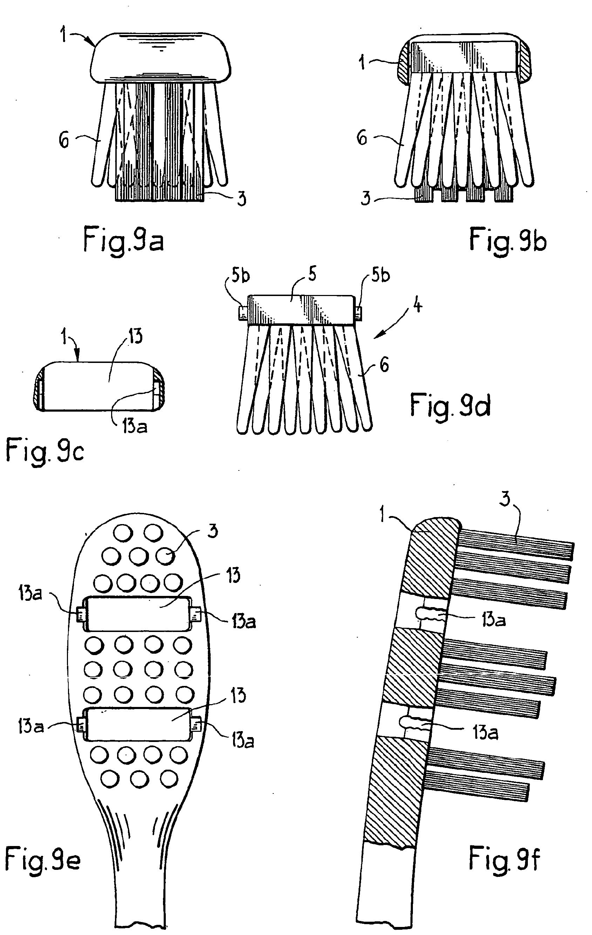

Fig. 9a-f zeigen eine weitere Ausführungsform für eine erfindungsgemässe Zahnbürste. Das Kopfteil 1 weist einen vorbereiteten Bereich 13 für das Trägerelement 5 des Zusatzteils 4 auf, die grösser als das Trägerelement 5 selbst ist. Der Bereich 13 ist beispielsweise ein vollständig durch das Kopfteil 1 durchgehendes Loch, vgl. Schnittzeichnungen Fig. 9b,d,e. Der Bereich 13 hat zwei seitliche Nuten 13a, deren Form an die Form zweier seitlicher Fortsätze 5b des Trägerelements 5 angepasst ist. Dieses wird in das Kopfteil 1 eingesetzt und verrastet dort. Aufgrund des Spiels des Trägerelements 5 innerhalb des Bereichs 13, das ein seitliches Verschieben und/oder eine Schwenkbewegung um die durch die Fortsätze 5b definierte Achse ermöglicht, ergibt sich eine besondere Elastizität bzw. federnde Wirkung des Zusatzteils 4. Die Rückseite des Kopfteils 1 kann wiederum mit einer Schicht aus Weichmaterial abgedeckt sein.

Fig. 10a-j zeigt ein weiteres Beispiel für eine mittels AFT hergestellte Ausführungsform einer erfindungsgemässen Zahnbürste. Die Figuren 10a-c entsprechen den Figuren 7a-c und zeigen jeweils die Trägerplatte 5 in verschiedenen Verfahrensstadien. Fig. 10d-f zeigen die dieselbe Trägerplatte 5 im Schnitt entlang der in Fig. 10a angedeuteten Linie I-I. Das mittig angeordnete weichelastische Element 6 ist flächig bzw. segelartig und in der Aufsicht (Fig. 10h) wellenförmig. Wie in Fig. 10e+f dargestellt, umfasst die weichelastische Struktur seitlich angeformte Bereiche 6", die im montierten Zustand (Fig. 10h) den Zahnbürstenkopf 1 seitlich begrenzen und mit der Aussenkontur des Kopfteils nahezu bündig abschliessen. Sie dienen beispielsweise als Aufprallschutz und/oder zur zusätzlichen Massage des Gaumens. Die Bereiche 6" weisen ebenfalls Löcher 21' auf zur Aufnahme von Borstenbündeln 3, die dadurch elastisch aufgehängt und beim Putzen besonders nachgiebig sind.

Das mit konventionellen Borsten 3 und der weichelastischen Struktur 6, 6', 6'' versehene Trägerelement 5 wird in eine Ausnehmung 13 im Bürstenkopf 1 eingesetzt. Der Bürstenkopf 1 ist in Fig. 10g+j ohne Trägerelement 5 sowie in Fig. 10h+i mit eingesetztem Trägerelement 5 in verschiedenen Ansichten dargestellt. An seinem seitlichen Rand weist der Bürstenkopf 1 bzw. die Ausnehmung 13 seitliche Öffnungen 25 auf, die an die zuvor an das Trägerelement 5 angespritzten seitlichen weichelastischen Bereiche 6'' angepasst sind.

Das Trägerelement 5 wird mittels Ultraschallschweissen mit dem Bürstenkopf 1 verbunden. Die Schweissfläche 26 ist gestrichelt angedeutet. Um die Verschweissung zu realisieren, weist das Trägerelement an seinem unteren Rand einen Schweissrand 26' auf, der bei der Montage auf dem Grund der Aussparung 13 aufliegt, wobei die Berührungsfläche die Schweissfläche 26 definiert. Der Schweissrand 26' schmilzt unter Ultraschalleinfluss, so dass die beiden Teile 5 und 1 miteinander verbunden werden.

Da sich gummielastisches Material nur bedingt Ultraschall schweissen lässt, wird die Schweissfläche 26 möglichst frei davon gehalten, wie z.B. bei der Zahnbürste aus Fig. 7, oder nur minimal unterbrochen, wie bei der Zahnbürste aus Fig. 10. Ziel ist in beiden Fällen die vollständige Abdichtung des Hohlraums 28 zwischen Trägerelement 5 und Kopfteil 1, um Eindringen von Wasser und Keimen zu verhindern. Bevorzugt wird dazu der Anspritzpunkt des weichelastischen Materials an der borstentragenden Vorderseite des Trägerelements 5 gewählt, damit keine unnötigen Materialbrücken die Schweissfläche 26 verkleinern. Falls weitere weichelastische Elemente am Kopfteil 1, insbesondere an dessen Rückseite, vorhanden sind, wird deren Lage so gewählt, dass sie die Schweissfläche 26 nicht verkleinern. Beispielsweise liegen sie und der entsprechende Anspritzpunkt vollständig innerhalb des durch die Schweissfläche 26 definierten Bereichs an der Rückseite des Kopfteils 1 (nicht dargestellt). Bevorzugt wird die gesamte Berührungsfläche zwischen Kopfteil 1 und Trägerelement 5 zu mindestens 25% verschweisst, besonders bevorzugt entlang des Kopfumfanges (Linie 26).

Im Beispiel aus Fig. 10 unterbrechen die weichelastischen Bereiche 6" die Schweissfläche 26, so dass dort ungeschweissten Stellen 27 entstehen. Diese sind vorteilhaft an der Seite des Kopfteils 1 angeordnet, während die in Längsrichtung vorderen und hinteren Bereiche des Trägerelements 5 mit dem Kopfteil 1 fest verschweisst sind. Dadurch wird ein sicherer Halt des Trägerelements 5 gewährleistet, da durch die Putzbewegung und entsprechende Hebelkräfte der vordere und hintere Bereich der grössten Belastung ausgesetzt ist.

Die ungeschweissten Stellen 27 werden vorliegend durch die weichelastischen Bereiche 6" nach Art einer Dichtlippe abgedichtet, so dass kein oder nur wenig Wasser in den Hohlraum 28 eindringen kann. Für eine gute Dichtfunktion wird vorzugsweise Material mit einer Shore A Härte von 50 oder weniger gewählt. Ungeschweisste Stellen zwischen Kopfteil und Trägerelement können auch gezielt eingesetzt werden, um eine gewisse Flexibilität zwischen den beiden Hartkomponenten zu erreichen.

Fig. 11 zeigt ein weiteres Beispiel für eine im AFT-Verfahren hergestellte Ausführungsform einer erfindungsgemässen Zahnbürste mit zwei segelartigen weichelastischen Reinigungselementen 6 in verschiedenen Ansichten. Das Trägerelement 5 ist an seiner Peripherie vollständig mit weichelastischem Material 6' umgeben, das im montierten Zustand (Aufsichtdarstellung Fig 11a) das Kopfteil 1 an seinem äusseren Umfang an der Oberseite vollständig umschliesst und als Aufprallschutz dient. In Bereichen 6" dient das Weichmaterial als Halterung für seitliche Borstenbündel 3, die durch das weichelastische Material 6" hindurchgeführt sind.

Wie aus Fig. 11c hervorgeht, berühren sich die Hartkomponenten von Trägerelement 5 und Kopfteil 1 entlang einer Fläche 26 unterhalb der Weichkomponente im Bereich 6' und können hier mittels Ultraschall verschweisst werden. Die Schweissfläche 26 ist durch die seitlichen Bereiche 6" unterbrochen, wobei jedoch, wie oben beschrieben, eine ausreichende Haltewirkung erzielt wird. Der Hohlraum 28 unterhalb des Trägerelements 5 wird durch die weichelastischen Bereiche 6" und die entlang der Fläche 26 verschweissten Stellen abgedichtet.

Die oben mit Bezug auf Fig. 10 und 11 beschriebene Art der Verschweissung und Abdichtung der Komponenten kann mit Vorteil auch bei anderen Zahnbürsten eingesetzt werden.

## Patentansprüche

1. Zahnbürste aufweisend einen Handgriff (2) und einen Kopfteil (1) mit einer aus einem Hartmaterial bestehenden Trägerplatte (5) und einer weichelastischen Struktur (6, 6', 6"), wobei die Trägerplatte (5) mit ihrer Rückseite dem Kopfteil (1) zugewandt in einen vorbereiteten Bereich (13) in Form einer flachen Aussparung im Kopfteil (1) eingesetzt ist, wobei die Trägerplatte (5) in ihrer äusseren Form an die Abmessungen des vorbereiteten Bereichs (13) angepasst ist und wobei die Trägerplatte (5) mit dem Kopfteil (1) durch Ultraschallschweissen unlösbar verbunden ist und wobei die Trägerplatte (5) Aussparungen (21) aufweist, durch welche Borstenfilamente (3) hindurchgeführt sind, **dadurch gekennzeichnet, dass** die mit der weichelastischen Struktur (6, 6', 6") versehene Trägerplatte (5) ein separates Zusatzteil (4) bildet, die weichelastische Struktur (6, 6', 6") wenigstens ein weichelastisches Reinigungselement umfasst und die durch Aussparungen (21, 21') der Trägerplatte (5) und/oder der weichelastischen Struktur (6") hindurchgeführten Borstenfilamente (3) zur Befestigung an der Trägerplatte (5) mit ihren im Anwendungsfall dem Kopfteil (1) zugewandten rückwärtigen Enden (3a) angeschmolzen sind.

2. Zahnbürste nach Anspruch 1, **dadurch gekennzeichnet, dass** die weichelastische Struktur (6, 6', 6") und die Trägerplatte (5) durch ein Zwei- oder Mehrkomponentenspritzgiessverfahren hergestellt sind, wobei vorzugsweise eine unlösbare Verbindung zwischen der weichelastischen Struktur (6, 6', 6") und der Trägerplatte (5) besteht.

3. Zahnbürste nach Anspruch 1 oder 2, **dadurch gekennzeichnet, dass** das Material der Trägerplatte (5) Polypropylen (PP), Styrol-Acryl-Nitril (SAN), Acryl-Nitril-Butadienstyrol (ABS), Isoplast^{®} oder Polyester (PET) ist.

4. Zahnbürste nach einem der vorangegangenen Ansprüche, **dadurch gekennzeichnet, dass** die weichelastische Struktur (6, 6', 6") aus natürlichem oder synthetischem Gummi, vorzugsweise aus einem thermoplastischen Elastomer, besteht, das bevorzugt eine Shore A Härte von weniger als 90, besonders bevorzugt von weniger als 50 hat.

5. Zahnbürste nach einem der vorangegangenen Ansprüche, **dadurch gekennzeichnet, dass** Verbindungsstellen zwischen dem Kopfteil (1) und der Trägerplatte (5) durch weichelastisches Material (6") abgedeckt sind, vorzugsweise in gegen das Eindringen von Wasser abdichtender Weise.

6. Zahnbürste nach einem der vorangegangenen Ansprüche, **dadurch gekennzeichnet, dass** die weichelastische Struktur (6, 6', 6") seitlich an der Trägerplatte (5) angeordnete Bereiche (6") umfasst, die im montierten Zustand seitlich mit der Aussenkontur des Kopfteils (1) abschliessen.

7. Zahnbürste nach Anspruch 6, **dadurch gekennzeichnet, dass** die seitlich an der Trägerplatte (5) angeordneten Bereiche (6") unverschweisste Stellen (27) zwischen dem Kopfteil (1) und der Trägerplatte (5) gegen Eindringen von Wasser abdichten.

8. Zahnbürste nach Anspruch 7, **dadurch gekennzeichnet, dass** die ungeschweissten Stellen (27) eine gewisse Flexibilität und Beweglichkeit zwischen dem Kopfteil (1) und der Trägerplatte (5) ermöglichen.

9. Zahnbürste nach Anspruch 7 oder 8, **dadurch gekennzeichnet, dass** die ungeschweißten Stellen (27) an der Seite des Kopfteils (1) angeordnet sind und dass die in Längsrichtung vorderen und hinteren Bereiche der Trägerplatte (5) mit dem Kopfteil (1) fest verschweißt sind.

10. Zahnbürste nach einem der Ansprüche 6 bis 9, **dadurch gekennzeichnet, dass** das Kopfteil (1) bzw. der vorbereitete Bereich (13) seitliche Öffnungen (25) aufweist, deren Form an die an der Trägerplatte (5) angeordneten seitlichen weichelastischen Bereiche (6") angepasst ist.

11. Zahnbürste nach einem der vorangegangenen Ansprüche, **dadurch gekennzeichnet, dass** die Trägerplatte (5) an seiner Rückseite eine als Schweissrand (26') wirkende, im Anwendungsfall dem Kopfteil (1) zugewandte, als Materialreservoir und/oder Energiekonzentrator wirkende, vorzugsweise spitze Kante (30) aufweist, wobei die Berührungsfläche eine Schweissfläche (26) definiert.

12. Zahnbürste nach Anspruch 11, **dadurch gekennzeichnet, dass** die Schweissfläche (26) vom weichelastischen Material freigehalten ist.

13. Zahnbürste nach einem der Ansprüche 11 oder 12, **dadurch gekennzeichnet, dass** sich auf der Rückseite des Kopfteils (1) weitere weicheleastische Elemente befinden, die sich vollständig innerhalb eines durch die Schweissfläche (26) definierten Bereiches befinden.

14. Zahnbürste nach einem der Ansprüche 11 bis 13, **dadurch gekennzeichnet, dass** die Schweissfläche (26) durch seitliche Bereiche aus Weichmaterial unterbrochen ist.

15. Zahnbürste nach einem der vorangegangenen Ansprüche, **dadurch gekennzeichnet, dass** die weichelastische Struktur auf der Trägerplatte (5) angeordnete flächige Elemente (6) umfasst.

16. Zahnbürste nach einem der vorangegangenen Ansprüche, **dadurch gekennzeichnet, dass** die Trägerplatte (5) zur Aufnahme der weichelastischen Struktur (6, 6', 6") vorbereitete Bereiche (20) und/oder Aussparungen (24) aufweist.

17. Zahnbürste nach einem der vorangegangenen Ansprüche, **dadurch gekennzeichnet, dass** eine Mehrzahl von borstenaufnehmenden Aussparungen (21, 21') in einem gemeinsamen Bereich der weichelastischen Struktur (6, 6', 6") angeordnet ist.

18. Zahnbürste nach einem der vorangegangenen Ansprüche, **dadurch gekennzeichnet, dass** die konventionellen Borstenfilamente (3) vor dem Befestigen der Trägerplatte (5) am Kopfteil (1) und/oder vor dem Befestigen auf der Trägerplatte (5) geschnitten und/oder abgerundet und/oder auf andere Weise für den späteren Gebrauch vorbereitbar sind.

19. Zahnbürste nach einem der vorangegangenen Ansprüche, **dadurch gekennzeichnet, dass** sich zwischen de Trägerplatte (5) und dem Kopfteil (1) ein Hohlraum (28) befindet.

20. Verfahren zur Herstellung einer Zahnbürste nach einem der vorangegangenen Ansprüche, wobei bei einer separaten Herstellung der mit der weichelastischen Struktur (6, 6', 6") versehenen Trägerplatte (5) wenigstens eine weichelastische Struktur (6, 6', 6") an der aus einem Hartmaterial bestehenden Trägerplatte (5) befestigt wird, wobei die Borstenfilamente (3) durch Aussparungen in der Trägerplatte (5) und/oder in der weichelastischen Struktur (6, 6', 6") hindurchgeführt werden und zur Befestigung an der Trägerplatte (5) bzw. an der weichelastischen Struktur (6, 6', 6") mit ihren im Anwendungsfall dem Kopfteil (1) zugewandten rückwärtigen Enden (3a) angeschmolzen werden, und wobei in einem weiteren Schritt die Trägerplatte (5) in einen vorbereiteten Bereich (13) in Form einer flachen Aussparung im Kopfteil (1) eingesetzt wird, wobei die Trägerplatte (5) in ihrer äusseren Form an die Abmessungen des vorbereiteten Bereichs (13) angepasst ist und wobei die Trägerplatte (5) mit dem Kopfteil (1) der Zahnbürste durch Ultraschallschweissen unlösbar verbunden wird.

21. Verfahren nach Anspruch 20, **dadurch gekennzeichnet, dass** die Borstenfilamente (3) vor dem Befestigen der Trägerplatte (5) am Kopfteil (1) und/oder vor dem Befestigen auf der Trägerplatte (5) geschnitten und/oder abgerundet und/oder auf andere Weise gebrauchsfertig gemacht werden.

22. Verfahren nach einem der Ansprüche 20 bis 21, **dadurch gekennzeichnet, dass** die weichelastische Struktur (6, 6', 6") und die Trägerplatte (5) im Zweikomponentenspritzgiessverfahren hergestellt und anschliessend mit dem Kopfteil (1) verbunden werden, wobei vorzugsweise eine unlösbare Verbindung zwischen der weichelastischen Struktur (6, 6', 6") und der Trägerplatte (5), bevor die Trägerplatte (5) mit Borstenfilamenten (3) besetzt wird, hergestellt wird.

23. Verfahren nach Anspruch 22, **dadurch gekennzeichnet, dass** der Anspritzpunkt für das weichelastische Material an der borstentragenden Vorderseite der Trägerplatte (5) gewählt wird.

24. Verfahren nach einem der Ansprüche 20 bis 23, **dadurch gekennzeichnet, dass** eine Berührungsfläche zwischen dem Kopfteil (1) und der Trägerplatte (5) zu wenigstens 25% verschweisst wird, bevorzugt entlang des gesamten Kopfumfanges.

25. Verfahren nach einem der Ansprüche 20 bis 23, **dadurch gekennzeichnet, dass** ungeschweißte Stellen (27) an der Seite des Kopfteils (1) angeordnet werden und nur die in Längsrichtung vorderen und hinteren Bereiche der Trägerplatte mit dem Kopfteil (1) verschweisst werden.

26. Verfahren nach einem der Ansprüche 20 bis 25, **dadurch gekennzeichnet, dass** ungeschweisste Stellen (27) zwischen dem Kopfteil (1) und der Trägerplatte (5) durch weichelastisches Material (6") abgedeckt werden, vorzugsweise in gegen das Eindringen von Wasser abdichtender Weise.

27. Verfahren nach einem der Ansprüche 20 bis 25, **dadurch gekennzeichnet, dass** auf der Rückseite des Kopfteils (1) weitere weicheleastische Elemente ausgeformt werden, die sich vollständig innerhalb eines durch eine Schweissfläche (26) definierten Bereiches befinden.

28. Verfahren nach einem der Ansprüche 20 bis 27, **dadurch gekennzeichnet, dass** die Schweissfläche (26) durch seitliche Bereiche aus Weichmaterial unterbrochen ist.

29. Verfahren nach einem der Ansprüche 20 bis 28, **dadurch gekennzeichnet, dass** zwischen dem Kopfteil (1) und der Trägerplatte (5) ungeschweisste Stellen ausgebildet werden, die eine gewisse Flexibilität zwischen den beiden Hartkomponenten des Kopfteils (1) und der Trägerplatte (5) gewährleisten.

30. Verfahren nach einem der Ansprüche 20 bis 29, **dadurch gekennzeichnet, dass** zwischen der Trägerplatte (5) und dem Kopfteil (1) ein Hohlraum (28) ausgebildet wird.

## Claims

1. Toothbrush having a handle (2) and a head part (1) with a carrier plate (5), which consists of a hard material, and a flexible structure (6, 6', 6"), wherein the carrier plate (5), with its rear side directed towards the head part (1), is inserted into a prepared region (13) in the form of a flat cutout in the head part (1), wherein the external shape of the carrier plate (5) is matched to the dimensions of the prepared region (13) and wherein the carrier plate (5) is connected in a non-releasable manner to the head part (1) by ultrasonic welding, and wherein the carrier plate (5) has cutouts (21) through which bristle filaments (3) are guided, **characterized in that** the carrier plate (5) which is provided with the flexible structure (6, 6', 6") forms a separate additional part (4), the flexible structure (6, 6', 6") comprises at least one flexible cleaning element, and the bristle filaments (3) which are guided through cutouts (21, 21') in the carrier plate (5) and/or in the flexible structure (6") are fused by way of their rear ends (3a), which in the application case are directed towards the head part (1), for fastening to the carrier plate (5).

2. Toothbrush according to Claim 1, **characterized in that** the flexible structure (6, 6', 6") and the carrier plate (5) are produced by a two-component or multicomponent injection-moulding process, wherein preferably a non-releasable connection is established between the flexible structure (6, 6', 6") and the plate element (5) .

3. Toothbrush according to Claim 1 or 2, **characterized in that** the material of the carrier plate (5) is polypropylene (PP), styrene-acrylonitrile (SAN), acrylonitrile-butadiene-styrene (ABS), Isoplast^{®} or polyester (PET).

4. Toothbrush according to one of the preceding claims, **characterized in that** the flexible structure (6, 6', 6") consists of natural or synthetic rubber, preferably of a thermoplastic elastomer, which preferably has a Shore A hardness of less than 90, particularly preferably of less than 50.

5. Toothbrush according to one of the preceding claims, **characterized in that** connecting locations between the head part (1) and the carrier plate (5) are covered by flexible material (6"), preferably in a manner so as to seal against the ingress of water.

6. Toothbrush according to one of the preceding claims, **characterized in that** the flexible structure (6, 6', 6") comprises regions (6") which are arranged laterally on the carrier plate (5) and terminate laterally with the outer contour of the head part (1) in the assembled state.

7. Toothbrush according to Claim 6, **characterized in that** the regions (6") which are arranged laterally on the carrier plate (5) seal non-welded locations (27) between the head part (1) and the carrier plate (5) against the ingress of water.

8. Toothbrush according to Claim 7, **characterized in that** the non-welded locations (27) permit a certain degree of flexibility and mobility between the head part (1) and the carrier plate (5).

9. Toothbrush according to Claim 7 or 8, **characterized in that** the non-welded locations (27) are arranged on the side of the head part (1), and **in that** the regions of the carrier plate (5) which are at the front and rear in the longitudinal direction are firmly welded to the head part (1) .

10. Toothbrush according to one of Claims 6 to 9, **characterized in that** the head part (1) and the prepared region (13) respectively have lateral openings (25) whose shape is matched to the lateral flexible regions (6") which are arranged on the carrier plate (5).

11. Toothbrush according to one of the preceding claims, **characterized in that** the carrier plate (5) has on its rear side a, preferably pointed, edge (30) which acts as a welding border (26'), is directed towards the head part (1) in the application case and acts as a material reservoir and/or energy concentrator, wherein the contact surface defines a welding surface (26).

12. Toothbrush according to Claim 11, **characterized in that** the welding surface (26) is kept free of the flexible material.

13. Toothbrush according to either of Claims 11 and 12, **characterized in that** further flexible elements are located on the rear side of the head part (1), the said further flexible elements being located fully within a region which is defined by the welding surface (26).

14. Toothbrush according to one of Claims 11 to 13, **characterized in that** the welding surface (26) is interrupted by lateral regions of soft material.

15. Toothbrush according to one of the preceding claims, **characterized in that** the flexible structure comprises planar elements (6) which are arranged on the carrier plate (5).

16. Toothbrush according to one of the preceding claims, **characterized in that** the carrier plate (5) has regions (20) and/or cutouts (24) which are prepared for accommodating the flexible structure (6, 6', 6").

17. Toothbrush according to one of the preceding claims, **characterized in that** a plurality of bristle-accommodating cutouts (21, 21') is arranged in a common region of the flexible structure (6, 6', 6").

18. Toothbrush according to one of the preceding claims, **characterized in that** the conventional bristle filaments (3) are cut and/or rounded and/or can be prepared for later use in some other way before the carrier plate (5) is fastened to the head part (1) and/or before the said bristle filaments are fastened on the carrier plate (5).

19. Toothbrush according to one of the preceding claims, **characterized in that** a cavity (28) is located between the carrier plate (5) and the head part (1).

20. Method for producing a toothbrush according to one of the preceding claims, wherein at least one flexible structure (6, 6', 6") is fastened to the carrier plate (5), which consists of a hard material, when the carrier plate (5) which is provided with the flexible structure (6, 6′, 6ʺ) is produced separately, wherein the bristle filaments (3) are guided through cutouts in the carrier plate (5) and/or in the flexible structure (6, 6′, 6ʺ) and are fused by way of their rear ends (3a), which in the application case are directed towards the head part (1), for fastening to the carrier plate (5) or to the flexible structure (6, 6′, 6ʺ), respectively, and wherein, in a further step, the carrier plate (5) is inserted into a prepared region (13) in the form of a flat cutout in the head part (1), wherein the external shape of the carrier plate (5) is matched to the dimensions of the prepared region (13) and wherein the carrier plate (5) is connected in a non-releasable manner to the head part (1) of the toothbrush by ultrasonic welding.

21. Method according to Claim 20, **characterized in that** the bristle filaments (3) are cut and/or rounded and/or made ready for use in some other way before the carrier plate (5) is fastened to the head part (1) and/or before the said bristle filaments are fastened on the carrier plate (5).

22. Method according to either of Claims 20 and 21, **characterized in that** the flexible structure (6, 6′, 6ʺ) and the carrier plate (5) are produced by a two-component injection-moulding process and then connected to the head part (1), wherein preferably a non-releasable connection is established between the flexible structure (6, 6', 6ʺ) and the carrier plate (5) before the carrier plate (5) is fitted with bristle filaments (3).

23. Method according to Claim 22, **characterized in that** the injection point for the flexible material is selected to be on the bristle-carrying front side of the carrier plate (5).

24. Method according to one of Claims 20 to 23, **characterized in that** a contact surface between the head part (1) and the carrier element (5) is welded over at least 25%, preferably along the entire periphery of the head.

25. Method according to one of Claims 20 to 23, **characterized in that** non-welded locations (27) are arranged on the side of the head part (1) and only the regions of the carrier plate which are at the front and rear in the longitudinal direction are welded to the head part (1) .

26. Method according to one of Claims 20 to 25, **characterized in that** non-welded locations (27) between the head part (1) and the carrier plate (5) are covered by flexible material (6ʺ), preferably in a manner so as to seal against the ingress of water.

27. Method according to one of Claims 20 to 25, **characterized in that** further flexible elements are formed on the rear side of the head part (1), the said further flexible elements being located fully within a region which is defined by a welding surface (26).

28. Method according to one of Claims 20 to 27, **characterized in that** the welding surface (26) is interrupted by lateral regions of soft material.

29. Method according to one of Claims 20 to 28, **characterized in that** non-welded locations are formed between the head part (1) and the carrier plate (5), the said non-welded locations ensuring a certain degree of flexibility between the two hard components of the head part (1) and the carrier plate (5).

30. Method according to one of Claims 20 to 29, **characterized in that** a cavity (28) is formed between the carrier plate (5) and the head part (1).

## Revendications

1. Brosse à dents présentant un manche (2) et une partie de tête (1) avec une plaque porteuse (5) constituée d'un matériau dur et une structure élastique souple (6, 6′, 6ʺ), la plaque porteuse (5) étant insérée avec son côté arrière tourné vers la partie de tête (1) dans une zone préparée (13) sous forme d'un creux plat dans la partie de tête (1), la plaque porteuse (5) étant adaptée, dans sa forme extérieure, aux dimensions de la zone préparée (13) et la plaque porteuse (5) étant connectée de manière permanente à la partie de tête (1) par soudage par ultrasons, et la plaque porteuse (5) présentant des évidements (21) à travers lesquels sont guidés des filaments de poils (3), **caractérisée en ce que** la plaque porteuse (5) pourvue de la structure élastique souple (6, 6', 6") forme une pièce supplémentaire séparée (4), la structure élastique souple (6, 6', 6") comprend au moins un élément de nettoyage élastique souple et les filaments de poils (3) guidés à travers des évidements (21, 21') de la plaque porteuse (5) et/ou de la structure (6") élastique souple sont fondus pour la fixation à la plaque porteuse (5) avec leurs extrémités arrière (3a) tournées, pendant l'utilisation, vers la partie de tête (1).

2. Brosse à dents selon la revendication 1, **caractérisée en ce que** la structure élastique souple (6, 6', 6") et la plaque porteuse (5) sont fabriqués par un procédé de moulage par injection à deux ou plusieurs composants, une connexion permanente existant de préférence entre la structure élastique souple (6, 6', 6") et la plaque porteuse (5).

3. Brosse à dents selon la revendication 1 ou 2, **caractérisée en ce que** le matériau de la plaque porteuse (5) est du polypropylène (PP), du styrène-acrylonitrile (SAN), de l'acrylonitrile-butadiène-styrène (ABS), de l'Isoplast^{®} ou du polyester (PET).

4. Brosse à dents selon l'une quelconque des revendications précédentes, **caractérisée en ce que** la structure élastique souple (6, 6', 6") se compose de caoutchouc naturel ou synthétique, de préférence d'un élastomère thermoplastique, qui a de préférence une dureté Shore A de moins de 90, de manière particulièrement préférée de moins de 50.

5. Brosse à dents selon l'une quelconque des revendications précédentes, **caractérisée en ce que** des points de connexion entre la partie de tête (1) et la plaque porteuse (5) sont recouverts par un matériau élastique souple (6ʺ), de préférence de manière étanche vis-à-vis de l'infiltration d'eau.

6. Brosse à dents selon l'une quelconque des revendications précédentes, **caractérisée en ce que** la structure élastique souple (6, 6', 6") comprend des parties (6'') disposées latéralement sur la plaque porteuse (5), qui se terminent dans l'état monté latéralement par le contour extérieur de la partie de tête (1).

7. Brosse à dents selon la revendication 6, **caractérisée en ce que** les parties (6ʺ) disposées latéralement sur la plaque porteuse (5) scellent des points (27) non soudés entre la partie de tête (1) et la plaque porteuse (5) contre l'infiltration d'eau.

8. Brosse à dents selon la revendication 7, **caractérisée en ce que** les points (27) non soudés permettent une certaine flexibilité et mobilité entre la partie de tête (1) et la plaque porteuse (5) .

9. Brosse à dents selon la revendication 7 ou 8, **caractérisée en ce que** les points (27) non soudés sont disposés du côté de la partie de tête (1) et **en ce que** les parties avant et arrière, dans la direction longitudinale, de la plaque porteuse (5), sont soudées fixement à la partie de tête (1) .

10. Brosse à dents selon l'une quelconque des revendications 6 à 9, **caractérisée en ce que** la partie de tête (1) ou la zone préparée (13) présente des ouvertures latérales (25) dont la forme est adaptée aux parties (6") élastiques souples latérales disposées sur la plaque porteuse (5) .

11. Brosse à dents selon l'une quelconque des revendications précédentes, **caractérisée en ce que** la plaque porteuse (5) présente sur son côté arrière, une arête de préférence pointue (30) agissant en tant que bord de soudage (26'), tournée pendant l'utilisation vers la partie de tête (1), et agissant comme réservoir de matériau et/ou concentrateur d'énergie, la surface de contact définissant une surface de soudage (26).

12. Brosse à dents selon la revendication 11, **caractérisée en ce que** la surface de soudage (26) est exempte de matériau élastique souple.

13. Brosse à dents selon l'une quelconque des revendications 11 et 12, **caractérisée en ce que** d'autres éléments élastiques souples se trouvent sur le côté arrière de la partie de tête (1), lesquels se trouvent complètement à l'intérieur d'une partie définie par la surface de soudage (26) .

14. Brosse à dents selon l'une quelconque des revendications 11 à 13, **caractérisée en ce que** la surface de soudage (26) est interrompue par des parties latérales en matériau souple.

15. Brosse à dents selon l'une quelconque des revendications précédentes, **caractérisée en ce que** la structure élastique souple comprend des éléments plats (6) disposés sur la plaque porteuse (5) .

16. Brosse à dents selon l'une quelconque des revendications précédentes, **caractérisée en ce que** la plaque porteuse (5) présente des parties préparées (20) et/ou des évidements (24) prévus pour recevoir la structure élastique souple (6, 6', 6") .

17. Brosse à dents selon l'une quelconque des revendications précédentes, **caractérisée en ce qu'**une pluralité d'évidements recevant des poils (21, 21') est disposée dans une partie commune de la structure élastique souple (6, 6', 6").

18. Brosse à dents selon l'une quelconque des revendications précédentes, **caractérisée en ce que** les filaments de poils (3) conventionnels, avant la fixation de la plaque porteuse (5) à la partie de tête (1) et/ou avant la fixation sur la plaque porteuse (5), sont coupés et/ou arrondis et/ou peuvent être préparés d'une autre manière pour l'utilisation ultérieure.

19. Brosse à dents selon l'une quelconque des revendications précédentes, **caractérisée en ce qu'**une cavité (28) est située entre la plaque porteuse (5) et la partie de tête (1).

20. Procédé de fabrication d'une brosse à dents selon l'une quelconque des revendications précédentes, dans lequel, dans le cas d'une fabrication séparée de la plaque porteuse (5) pourvue de la structure élastique souple (6, 6′, 6"), au moins une structure élastique souple (6, 6', 6") est fixée sur la plaque porteuse (5) constituée d'un matériau dur, les filaments de poils (3) étant guidés à travers des évidements dans la plaque porteuse (5) et/ou dans la structure élastique souple (6, 6', 6") et étant fondus pour la fixation à la plaque porteuse (5) ou à la structure élastique souple (6, 6', 6") avec leurs extrémités arrière (3a) tournées dans le cas de l'utilisation vers la partie de tête (1), et dans lequel, dans une autre étape, la plaque porteuse (5) est insérée dans une zone préparée (13) sous forme d'un creux plat dans la partie de tête (1), la plaque porteuse (5) étant adaptée, dans sa forme extérieure, aux dimensions de la zone préparée (13) et la plaque porteuse (5) étant connectée de manière permanente à la partie de tête (1) de la brosse à dents par soudage par ultrasons.

21. Procédé selon la revendication 20, **caractérisé en ce que** les filaments de poils (3), avant la fixation de la plaque porteuse (5) sur la partie de tête (1) et/ou avant la fixation sur la plaque porteuse (5), sont coupés et/ou arrondis et/ou préparés d'une autre manière pour l'utilisation ultérieure.

22. Procédé selon l'une quelconque des revendications 20 et 21, **caractérisé en ce que** la structure élastique souple (6, 6', 6") et la plaque porteuse (5) sont fabriqués dans un procédé de moulage par injection à deux composants et sont ensuite connectés à la partie de tête (1), une connexion permanente étant créée de préférence entre la structure élastique souple (6, 6′, 6") et la plaque porteuse (5), avant que la plaque porteuse (5) soit garnie des filaments de poils (3) .

23. Procédé selon la revendication 22, **caractérisé en ce que** le point d'injection pour le matériau élastique souple est choisi au niveau du côté avant portant les poils de la plaque porteuse (5).

24. Procédé selon l'une quelconque des revendications 20 à 23, **caractérisé en ce qu'**une surface de contact est soudée entre la partie de tête (1) et la plaque porteuse (5), au moins sur 25 %, et de préférence le long de toute la périphérie de la tête.

25. Procédé selon l'une quelconque des revendications 20 à 23, **caractérisé en ce que** des points non soudés (27) sont disposés du côté de la partie de tête (1) et seulement les parties avant et arrière de la plaque porteuse, dans la direction longitudinale, sont soudées à la partie de tête (1) .

26. Procédé selon l'une quelconque des revendications 20 à 25, **caractérisé en ce que** des points non soudés (27) entre la partie de tête (1) et la plaque porteuse (5) sont recouverts par du matériau élastique souple (6"), de préférence de manière étanche vis-à-vis de l'infiltration d'eau.

27. Procédé selon l'une quelconque des revendications 20 à 25, **caractérisé en ce que** d'autres éléments élastiques souples sont façonnés sur le côté arrière de la partie de tête (1), lesquels se trouvent complètement à l'intérieur d'une partie définissant une surface de soudage (26).

28. Procédé selon l'une quelconque des revendications 20 à 27, **caractérisé en ce que** la surface de soudage (26) est interrompue par des parties latérales en matériau souple.

29. Procédé selon l'une quelconque des revendications 20 à 28, **caractérisé en ce que** des points non soudés sont réalisés entre la partie de tête (1) et la plaque porteuse (5), lesquels garantissent une certaine flexibilité entre les deux composants durs de la partie de tête (1) et de la plaque porteuse (5).

30. Procédé selon l'une quelconque des revendications 20 à 29, **caractérisé en ce qu'**une cavité (28) est réalisée entre la plaque porteuse (5) et la partie de tête (1).
